(19) Europäisches Patentamt / European Patent Office / Office européen des brevets

(11) **EP 3 547 476 B1**

(12) **EUROPEAN PATENT SPECIFICATION**

(45) Date of publication and mention
of the grant of the patent:
**15.03.2023 Bulletin 2023/11**

(21) Application number: **17873589.0**

(22) Date of filing: **08.11.2017**

(51) International Patent Classification (IPC):
*H02H 7/06* $^{(2006.01)}$     *H02H 3/02* $^{(2006.01)}$
*H02H 3/20* $^{(2006.01)}$     *H02P 9/00* $^{(2006.01)}$
*H02P 9/04* $^{(2006.01)}$     *H02P 101/10* $^{(2015.01)}$
*H02H 3/06* $^{(2006.01)}$

(52) Cooperative Patent Classification (CPC):
**H02H 3/066; H02H 3/02; H02H 3/20; H02H 7/06;
H02H 7/067; H02P 9/00; H02P 9/04**

(86) International application number:
**PCT/JP2017/040305**

(87) International publication number:
**WO 2018/096930 (31.05.2018 Gazette 2018/22)**

(54) **OVERVOLTAGE PROTECTION DEVICE OF VARIABLE SPEED POWER GENERATION SYSTEM**

ÜBERSPANNUNGSSCHUTZVORRICHTUNG EINES STROMERZEUGUNGSSYSTEMS MIT
VARIABLER GESCHWINDIGKEIT

DISPOSITIF DE PROTECTION CONTRE LES SURTENSIONS D'UN SYSTÈME DE GÉNÉRATION
D'ÉNERGIE À VITESSE VARIABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2016 JP 2016229035**

(43) Date of publication of application:
**02.10.2019 Bulletin 2019/40**

(73) Proprietors:
• **Kabushiki Kaisha Toshiba
Minato-ku
Tokyo 105-8001 (JP)**
• **Toshiba Energy Systems & Solutions
Corporation
Kawasaki-shi, Kanagawa 212-0013 (JP)**

(72) Inventors:
• **ISHIZUKI, Teruyuki
Kawasaki-shi, Kanagawa 212-0013 (JP)**
• **KAGEYAMA, Takahisa
Kawasaki-shi, Kanagawa 212-0013 (JP)**

(74) Representative: **Hoffmann Eitle
Patent- und Rechtsanwälte PartmbB
Arabellastraße 30
81925 München (DE)**

(56) References cited:
EP-A1- 2 525 464     EP-A1- 2 899 824
WO-A1-2014/012553     JP-A- H07 193 982
JP-A- H11 215 896

**Description**

Technical Field

Embodiments of the present invention relate to an overvoltage protection device of a variable-speed power system.

Background Art

A variable-speed pumped storage power system using a doubly-fed alternator is equipped with an overvoltage suppression device in order to suppress an overvoltage in a secondary circuit that is generated when a grid system failure has occurred and to protect main circuit equipment, such as a generator-motor or a converter, from the overvoltage. As an example, the overvoltage suppression device uses a large-current and short-time rating short-circuit device that is configured by a large-capacity semiconductor element such as a thyristor. In the variable-speed pumped storage power system, a function is implemented whereby, when a short-circuit fault is removed by a grid system circuit breaker after the occurrence of the grid system failure, a switching element of an inverter of a secondary exciter is operated in such a way that a DC voltage of the inverter is applied as a reverse voltage to the thyristor configuring the short-circuit device of the overvoltage suppression device such that a current flowing through the thyristor is brought to zero and the thyristor is forcibly turned off, the overvoltage suppression device is freed early and reliably from a short-circuit state, the operation of the secondary exciter is resumed, and the variable-speed pumped storage power system is restored at high speed without being stopped (see, for example, Patent Literature 1). Hereinafter, control using this function is referred to as "reset control" of the overvoltage suppression device. Patent Literature 2 relates to a method of operating a wind turbine. Patent Literature 3 relates to a control method for low voltage ride through.

[CITATION LIST]

[PATENT LITERATURE]

Patent Literature 1: Japanese Patent No. 3286049 (paragraphs [0026] to [0027], FIG. 1, etc.)
Patent Literature 2: WO 2014/012553 A1
Patent Literature 3: EP 2 525 464 A1

Disclosure of Invention

In the overvoltage suppression device described above, when reset control is performed on the overvoltage suppression device in order to continue the operation of the variable-speed pumped storage power system after the removal of a grid system failure, a semiconductor element such as a thyristor that configures a short circuit receives a line-to-line voltage after the completion of reset control at the time of the grid system failure. Therefore, it is requested that the temperature of a joint of a semiconductor immediately after resetting be lower than or equal to a temperature at which the joint can withstand a secondary circuit voltage.

Therefore, in a case where reset control is performed, an allowable increase in temperature is reduced in comparison with a case where reset control is not performed, and a maximum current that can be applied to the semiconductor element of the overvoltage suppression device is reduced. Accordingly, it is requested that the number of parallel circuits of the semiconductor element be increased as needed.

Originally, reset control does not need to be performed on the overvoltage suppression device so as to continue an operation at the time of a failure inside a power plant, but needs to be performed at the time of a grid system failure on a high-voltage side of a main transformer. Accordingly, a duty for reset control required for the semiconductor element that configures the short-circuit device of the overvoltage suppression device is to cope with a maximum failure current at the time of the grid system failure on the high-voltage side of the main transformer. Reset control does not need to be performed with respect to a larger fault current at the time of a failure inside a power plant that occurs on a low-voltage side of the main transformer. Accordingly, even when the temperature of the joint of the semiconductor increases, it is only necessary to consider a resistance that enables a current to be applied in a short-circuit state.

However, in a case where the overvoltage suppression device is designed based on the maximum failure current at the time of the grid system failure on the high-voltage side of the main transformer, when a failure on the low-voltage side of the main transformer fails to be determined and reset control is erroneously performed on the overvoltage suppression device, equipment such as the short-circuit device including the semiconductor element may be damaged.

Therefore, conventionally, the overvoltage suppression device is designed to increase in size, for example, by increasing the number of parallel circuits of the semiconductor element. By doing this, the equipment is not damaged even when reset control is performed with respect to a maximum failure current at the time of the occurrence of a three-phase short-circuit failure on the low-voltage side of the main transformer. The overcurrent resistance of a semiconductor having a small thermal capacity is small. Therefore, the size of the equipment increases even in a short-time operating duty, and this results in an increase in a price of the short-circuit device, the size of the device, and the space of a power plant.

The present invention is made in order to solve the problems described above, and it is an object of the present invention to provide an overvoltage protection device as defined in independent claim 1. The protection device protects a variable-speed power system and performs appropriate reset control such that equipment is not damaged, and that achieves a reduction in the number of parallel circuits of a semiconductor element that configures a short-circuit device, a reduction in a manufacturing cost, a reduction in the size of a device, a reduction in the size of a building, or the like.

Brief Description of Drawings

FIG. 1 is a diagram showing the overall configuration of a power system including a variable-speed pumped storage power system according to a first embodiment.
FIG. 2 is a configuration diagram mainly showing a functional configuration related to an overvoltage protection device of the variable-speed pumped storage power system according to the first embodiment.
FIG. 3 is a diagram showing an example of an internal configuration of a reset control locking condition determination unit in FIG. 2.
FIG. 4 is a diagram showing the overall configuration of a power system including a variable-speed pumped storage power system according to a fifth embodiment.
FIG. 5 is a configuration diagram mainly showing a functional configuration related to an overvoltage protection device of the variable-speed pumped storage power system according to the fifth embodiment.
FIG. 6 is a diagram showing an example of an internal configuration of a reset control locking condition determination unit in FIG. 5.
FIG. 7 is a diagram showing the overall configuration of a power system including a variable-speed pumped storage power system according to a sixth embodiment.
FIG. 8 is a configuration diagram mainly showing a functional configuration related to an overvoltage protection device of the variable-speed pumped storage power system according to the sixth embodiment.
FIG. 9 is a diagram showing an example of an internal configuration of a reset control locking condition determination unit in FIG. 8.
FIG. 10 is a diagram explaining processing of a threshold processing circuit in FIG. 9.

Mode for Carrying Out the Invention

Embodiments are described below with reference to the accompanying drawings.

(First Embodiment)

Initially, a first embodiment is described.

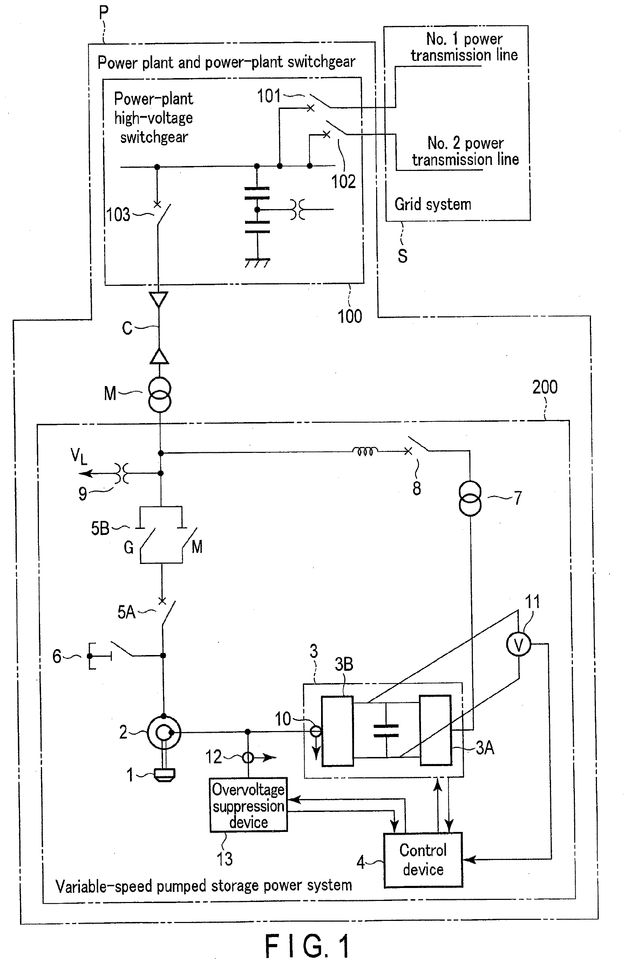

FIG. 1 is a diagram showing the overall configuration of a power system including a variable-speed pumped storage power system according to the first embodiment.
As shown in FIG. 1, a power plant and power-plant switchgear P includes a power-plant high-voltage switchgear 100 connected to a grid system S, and a variable-speed pumped storage power system 200 connected to the power-plant high-voltage switchgear 100 via a power cable C and a main transformer M. A low-voltage side of the main transformer M is equivalent to an internal circuit of the power plant. The main transformer M may be configured as a portion of the variable-speed pumped storage power system.
The power-plant high-voltage switchgear 100 includes circuit breakers 101 and 102 that respectively open and close power lines connected, for example, to a No. 1 power transmission line and a No. 2 power transmission line on a side of the grid system S. The power-plant high-voltage switchgear 100 also includes a circuit breaker 103 that opens and closes a power line connected to the power cable C on a side of the main transformer M.
The variable-speed pumped storage power system includes: a pump turbine 1; a variable-speed generator-motor (a winding induction machine) 2 implemented by a doubly-fed alternator; a self-excitation secondary exciter (an AC exciter) 3 that is connected to a secondary winding of the variable-speed generator-motor 2 and applies an AC of a variable frequency and that is implemented by a frequency converter, the self-excitation secondary exciter 3 including a converter 3A and an inverter 3B; a control device 4 that controls a voltage, a current, a frequency, and a phase of the AC output by the secondary exciter 3 and that also controls, for example, the opening/closing of switchgears 5A and 5B and the like; a parallel circuit breaker 5A and a phase inversion disconnector 5B for system interconnection that are connected to a stator winding side of the variable-speed generator-motor 2; a start/brake disconnector 6 that causes three-phase short-circuiting at a stator winding terminal of the variable-speed generator-motor 2; an excitation transformer 7 that generates an AC power supply to be used by the secondary exciter 3; an excitation circuit breaker 8 that interrupts AC power supplied to the excitation transformer 7; a primary circuit voltage detector (an instrument transformer) 9 that measures a voltage of a primary circuit on the stator winding side of the variable-speed generator-motor 2; a secondary circuit current detector 10 that measures a current flowing through a secondary circuit on a rotor winding side of the variable-speed generator-motor 2; a secondary circuit voltage detector 11 that measures a voltage of the secondary circuit on the rotor winding side of the variable-speed generator-motor 2 or a DC link voltage of the secondary exciter 3; a short-circuit current detector 12 that measures a three-phase short-circuit current in the secondary circuit on the rotor winding side of the variable-speed generator-motor 2; an overvoltage suppression device 13 using a large-current and short-time rating short-circuit device configured by a large-capacity semiconductor element such as a thyristor; and others. The overvoltage suppression device 13 connects respective phases via a short-circuit device connected to a circuit between the secondary exciter 3 and a rotor winding of the variable-speed generator-motor 2 or via the short-circuit device and a resistor.

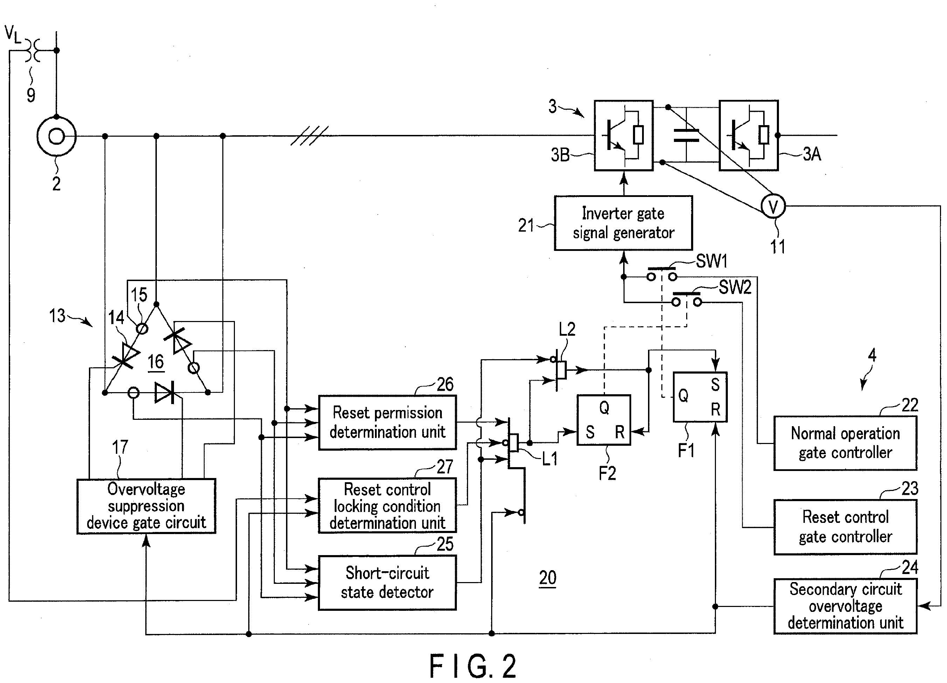

FIG. 2 is a configuration diagram mainly showing a functional configuration related to an overvoltage protection device of the variable-speed pumped storage power system according to the present embodiment. The same reference numbers are given to the same components as those in FIG. 1.

An overvoltage protection device 20 of this variable-speed pumped storage power system includes at least a portion of the overvoltage suppression device 13 and the control device 4 described above, and also includes a measurement device, a detector, and the like that measure and detect an electric quantity such as a current or a voltage of each part, element temperature, and the operation states of various protection relays. Further, the overvoltage protection device 20 includes a detection unit (this is equivalent, for example, to a "reset control locking condition determination unit 27" described later) and a control unit (this is equivalent, for example, to "logic circuits L1 and L2, switching control circuits F1 and F2, and switches SW1 and SW2" described later). The detection unit detects a prescribed phenomenon that occurs when a failure has occurred on a high-voltage side of the main transformer M or when a failure has not occurred on the low-voltage side of the main transformer M or inside the main transformer M, or the detection unit detects that the prescribed phenomenon has not occurred. The control unit determines based on a detection result of the detection unit whether control to forcibly release an operation of the overvoltage suppression device will be permitted to be performed.

The overvoltage suppression device 13 includes a short-circuit device 16, and the short-circuit device 16 includes thyristors 14 that each are connected between phases of a secondary winding of the variable-speed generator-motor 2, and thyristor current detectors 15 that detect currents of the thyristors 14. The thyristor current detectors 15 are equivalent, for example, to the short-circuit current detector 12 described above. In addition, the overvoltage suppression device 13 is equipped with an overvoltage suppression device gate circuit 17 that gives a gate signal that controls the firing/extinguishing of each of the thyristors 14 to a gate of each of the thyristors 14.

The control device 4 performs appropriate reset control so that equipment such as the short-circuit device 16 including a semiconductor element is not damaged. As an example, when a value of an applied current of the short-circuit device 16 during a short-circuit operation is smaller than or equal to a current specified value that is specified in advance, an elapsed time of the short-circuit operation of the short-circuit device 16 is greater than or equal to an operation continuation time specified value that is specified in advance (or the disconnection of a circuit breaker connected to the grid system S is completed), and a measured value of an electric quantity obtained from the rotor winding side or the stator winding side of the variable-speed generator-motor 2 satisfies a given condition, the control device 4 performs control to forcibly release a short-circuit state of the short-circuit device 16. Specifically, the given condition means, for example, that a value of a "voltage on the low-voltage side of the main transformer M" (a voltage on the stator winding side) during a prescribed determination period before control to forcibly release the short-circuit state of the short-circuit device 16 is performed is not smaller than or equal to a voltage specified value that is specified in advance (or does not fall below the voltage specified value).

The control device 4 described above is configured by an inverter gate signal generator 21, a normal operation gate controller 22, a reset control gate controller 23, a secondary circuit overvoltage determination unit 24, a short-circuit state detector 25, a reset permission determination unit 26, a reset control locking condition determination unit 27, switches SW1 and SW2, logic circuits L1 and L2, switching control circuits F1 and F2, and the like.

The inverter gate signal generator 21 generates a gate signal that drives the inverter 3B of the secondary exciter 3.

The normal operation gate controller 22 outputs a signal that controls a gate signal for normal operation.

The reset control gate controller 23 outputs a signal that controls a gate signal for reset control.

The secondary circuit overvoltage determination unit 24 determines whether an overvoltage of a prescribed level or more has occurred in the secondary circuit on the rotor winding side of the variable-speed generator-motor 2. When the secondary circuit overvoltage determination unit 24 determines that the overvoltage has occurred, the secondary circuit overvoltage determination unit 24 outputs a signal indicating the occurrence of the overvoltage, namely, a signal instructing an overvoltage protection (OVP) operation (for example, a signal of the value "1").

The short-circuit state detector 25 detects a state of the short-circuit device 16 based on the value of the applied current during the short-circuit operation of the short-circuit device 16, namely, current values of the thyristors 14. When the short-circuit state detector 25 detects that the short-circuit device 16 is short-circuited, the short-circuit state detector 25 outputs a signal indicating this fact (for example, a signal of the value "1").

The reset permission determination unit 26 determines based on the current values of the thyristors 14 whether the resetting of the OVP operation will be permitted. When the current values of the thyristors 14 are smaller than or equal to a current specified value that is specified in advance, the reset permission determination unit 26 outputs a signal indicating the permission of resetting (for example, a signal of the value "1").

The reset control locking condition determination unit 27 determines whether a condition for locking reset control (a condition for not performing reset control) is satisfied based on a voltage $V_L$ of each phase of a three-phase AC detected by a primary circuit voltage detector 9 and the signal output from the secondary circuit overvoltage determination unit 24. When the reset control locking condition determination unit 27 determines that the condition is satisfied, the reset control locking condition determination unit 27 outputs a signal instructing the locking of reset control (for example, a signal of the value "1"). When the reset control locking condition determination unit 27 determines that the condition is not satisfied, the reset control locking condition determination unit 27 outputs a signal indicating that reset control will not be locked (for example, a signal of the value "0").

The switch SW1 switches the supply/stop of a command to generate the gate signal for normal operation in accordance with the switching of the ON/OFF state.

The switch SW2 switches the supply/stop of a command to generate the gate signal for reset control in accordance with the switching of the ON/OFF state.

The logic circuit L1 receives an inverted signal of the signal output from the secondary circuit overvoltage determination unit 24, the signal output from the short-circuit state detector 25, the signal output from the reset permission determination unit 26, and an inverted signal of the signal output from the reset control locking condition determination unit 27. When an AND condition of each of the received signals is satisfied (for example, when the values of all of the signals are "1"), the logic circuit L1 outputs a signal instructing that reset control will be performed (for example, a signal of the value "1").

The logic circuit L2 receives the signal output from the logic circuit L1 and an inverted signal of the signal output from the short-circuit state detector 25. When an AND condition of each of the received signals is satisfied (for example, when the values of both signals are "1"), the logic circuit L2 outputs a signal instructing that reset control will be released (and normal operation will be performed) (for example, a signal of the value "1").

The switching control circuit F1 turns on the switch SW1 in accordance with the signal output from the logic circuit L2 (for example, a signal of the value "1"), and turns off the switch SW1 in accordance with the signal output from the secondary circuit overvoltage determination unit 24 (for example, a signal of the value "1").

The switching control circuit F2 turns on the switch SW2 in accordance with the signal output from the logic circuit L1, and turns off the switch SW2 in accordance with the signal output from the logic circuit L2.

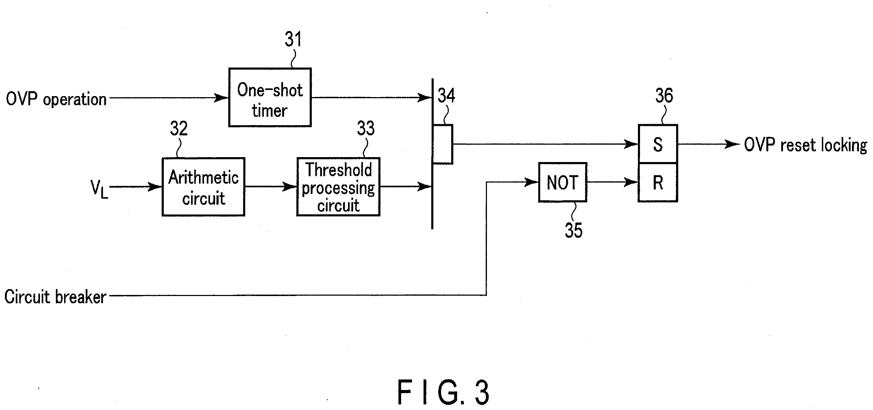

FIG. 3 is a diagram showing an example of an internal configuration of the reset control locking condition determination unit 27.

The reset control locking condition determination unit 27 includes a one-shot timer 31, an arithmetic circuit 32, a threshold processing circuit 33, a logic circuit 34, a NOT circuit 35, a switching control circuit 36, and the like.

The one-shot timer 31 measures a specified time (a determination time specified value) from a point in time at which the signal instructing the overvoltage protection (OVP) operation (for example, a signal of the value "1") is input from the secondary circuit overvoltage determination unit 24 to a point in time at which reset control is performed. The one-shot timer 31 outputs a prescribed signal (for example, a signal of the value "1") until the specified time elapses from the point in time at which the signal is input.

The arithmetic circuit 32 calculates an absolute value of a voltage vector from the voltage $V_L$ of each phase of the three-phase AC that has been output from the primary circuit voltage detector 9, and outputs the absolute value.

When the value output from the arithmetic circuit 32 is a preset threshold (for example, 40% of a rated voltage of the primary circuit) (or when the value is smaller than the preset threshold), the threshold processing circuit 33 outputs a prescribed signal (for example, a signal of the value "1"). When the value output from the arithmetic circuit 32 is not the preset threshold (or is not smaller than the preset threshold), the threshold processing circuit 33 outputs a prescribed signal that is different from the signal above (for example, a signal of the value "0").

The threshold is set from the viewpoint of not hindering the performance of reset control when a failure has occurred on the high-voltage side of the main transformer M and of obviating the flowing of a current that may damage equipment such as the short-circuit device 16 including the semiconductor element in a case where reset control is performed when a failure has occurred on the low-voltage side of the main transformer M or inside the main transformer M. Accordingly, the threshold is set, for example, in such a way that a failure occurrence point at the time when a failure has occurred (whether a failure has occurred on the high-voltage side of the main transformer M or has occurred on the low-voltage side of the main transformer M or inside the main transformer M) can be identified from an output value of the threshold processing circuit 33.

More specifically, when the failure occurrence point is located on the high-voltage side of the main transformer M, the threshold is set in such a way that the value output from the arithmetic circuit 32 (namely, the absolute value of the voltage vector calculated from the voltage $V_L$ of each phase) exceeds the threshold or is greater than or equal to the threshold. When the failure occurrence point is located on the low-voltage side of the main transformer M or inside the main transformer M, the threshold is set in such a way that the value output from the arithmetic circuit 32 (namely, the absolute value of the voltage vector calculated from the voltage $V_L$ of each phase) is smaller than or equal to the threshold or is smaller than the threshold.

By setting the threshold as described above, the reset control locking condition determination unit 27 can detect based on the output value of the threshold processing circuit 33 that a failure has occurred on the high-voltage side of the main transformer M (or that a failure has not occurred on the low-voltage side of the main transformer M or inside the main transformer M), or that a failure has occurred on the low-voltage side of the main transformer M or inside the main transformer M (or that a failure has not occurred on the high-voltage side of the main transformer M).

A specific example of setting the threshold is given below.

As an example, when a failure has occurred on the high-voltage side of the main transformer M, a voltage $V_L$ that is detected by the primary circuit voltage detector 9 on the low-voltage side of the main transformer M at the moment of occurrence is obtained according to the following equation.

$$V_L = Vex(Xt + Xf)/(Xg + Xt + Xf) \quad ...(1)$$

where

Ve: internal induced voltage (pu value) of generator;
Xg: internal impedance (pu value) of generator;
Xt: impedance (pu value) of main transformer; and
Xf: impedance (pu value) to fault point.

By using equation (1) described above, a position of a failure (a fault point) can be determined from an amount of a decrease in $V_L$.

Here, assume that Xg is 20% and Xt is 15%.

When a failure has occurred in a position closest to the high-voltage side of the main transformer M, it can be considered that Xf = 0. Therefore, the voltage $V_L$ is about "40% of the rated voltage of the primary circuit" according to equation (1). Stated another way, it is understood that this value is a value in a case where the voltage decreases most at the moment of the occurrence of a failure on the high-voltage side of the main transformer M. Therefore, when the voltage is lower than this value, a failure has not occurred on the high-voltage side of the main transformer M, but a failure has occurred on the low-voltage side of the main transformer M or inside the main transformer M. Accordingly, by applying this value to the threshold of the threshold processing circuit 33, a failure occurrence point at the time when a failure has occurred (whether a failure has occurred on the high-voltage side of the main transformer M, or has occurred on the low-voltage side of the main transformer M or inside the main transformer M) can be identified.

A basic idea has been described above. In an actual generator-motor, excitation control is performed at high speed, and the internal induced voltage Ve changes during the occurrence of a failure. Therefore, identification can be performed accurately by determining the threshold described above based on a result obtained by calculating a value of a voltage generated in an actual machine by using a computer analysis program such as the electro-magnetic transients program (EMTP).

When an AND condition between the signal output from the one-shot timer 31 and the signal output from the threshold processing circuit 33 is satisfied (for example, when the values of both signals are "1"), the logic circuit 34 outputs a signal instructing that reset control will be locked.

The NOT circuit 35 receives a signal indicating an opening/closing state of the parallel circuit breaker 5A. As an example, in a process in which the variable-speed pumped storage power system 200 is stopped for protection by a not-illustrated protection relay system after reset control is locked, when the NOT circuit 35 receives a signal indicating an opening state of the parallel circuit breaker 5A (for example, a signal of the value "0"), the NOT circuit 35 inverts the signal, and outputs a signal after inversion (for example, a signal of the value "1") as a signal instructing that locking will be released.

When the switching control circuit 36 receives the signal instructing that reset control will be locked (for example, a signal of the value "1") from the logic circuit 34, the switching control circuit 36 outputs the signal instructing that reset control will be locked (for example, a signal of the value "1") with no change. When the switching control circuit 36 receives the signal instructing that locking will be released (for example, a signal of the value "1") from the NOT circuit 35, the switching control circuit 36 outputs a signal that does not instruct that reset control will be locked (for example, a signal of the value "0").

As an example, a case is considered where a grid system failure has occurred in the No. 1 power transmission line or the No. 2 power transmission line of the grid system S during normal operation in the system configuration described above. When a failure current including a transient DC component is generated in the secondary circuit on the rotor winding side of the variable-speed generator-motor 2 due to this grid system failure, a DC capacitor is charged through an anti-parallel diode of the inverter 3B, and an overvoltage is generated in the secondary circuit.

A value of a voltage detected by the secondary circuit voltage detector 11 is transmitted to the secondary circuit overvoltage determination unit 24. When the secondary circuit overvoltage determination unit 24 determines that an overvoltage was generated in the secondary circuit, the secondary circuit overvoltage determination unit 24 stops the generation of the gate signal for normal operation under the control of the normal operation gate controller 22 via the switching control circuit F1 and the switch SW1. In addition, the secondary circuit overvoltage determination unit 24 short-circuits the short-circuit device 16 via the overvoltage suppression device gate circuit 17, and flows the failure current into the short-circuit device 16 so as to suppress the overvoltage of the secondary circuit.

When the failure current is attenuated with time and the reset permission determination unit 26 detects that the failure current becomes lower than or equal to a current that can be controlled by the inverter 3B, the reset permission determination unit 26 outputs the signal indicating the permission of resetting (for example, a signal of the value "1"). At this time, the short-circuit state detector 25 detects the state of the short-circuit device 16, and outputs a signal indicating that the short-circuit device 16 is short-circuited (for example, a signal of the value "1"). The reset control locking condition determination unit 27 outputs a signal indicating that a condition for locking reset control is not satisfied (for example, a signal of the value "0"), because the absolute value of the voltage vector obtained from the voltage $V_L$ of each phase exceeds a threshold that is specified in advance (or is greater than or equal to the threshold). In addition, the secondary circuit overvoltage determination unit 24 outputs a signal indicating that an overvoltage has not been generated (for example, a signal of the value "0").

In this case, an AND condition of each of the signals input to the logic circuit L1 is satisfied (for example, values of all of the signals are "1"), and therefore, the logic circuit L1 outputs a signal instructing that reset control will be performed (for example, a signal of the value "1"), and causes the inverter 3B to be supplied with the gate signal for reset control under the control of the reset control gate controller 23, via the switching control circuit F2 and the switch SW2. By doing this, the reset control gate controller 23 controls the inverter gate signal generator 21 to provide the gate signal such that a reverse voltage is applied from the inverter 3B to each of the thyristors 14 that are electrically connected, and the short-circuit state of the short-circuit device 16 is released at high speed.

When the short-circuit state detector 25 detects that the short-circuit state of the short-circuit device 16 has been released, the logic circuit L1 stops an instruction to perform reset control. Meanwhile, the logic circuit L2 causes the generation of the gate signal for reset control under the control of the reset control gate controller 23 to be stopped via the switching control circuit F2 and the switch SW2. The logic circuit L2 also causes the generation of the gate signal for normal operation under the control of the normal operation gate controller 22 to be resumed via the switching control circuit F1 and the switch SW1. By doing this, the normal operation of the secondary exciter 3 is resumed, the variable-speed pumped storage power system 200 is restored to normal operation after the removal of a failure, and operation is continued.

Next, a case is considered where a three-phase short-circuit failure has occurred inside the variable-speed pumped storage power system 200 that is located on the low-voltage side of the main transformer M in the system configuration described above. Description of an operation common to an operation in the case of the grid system failure described above is omitted, and a different operation is principally described.

When a three-phase short-circuit failure has occurred inside the variable-speed pumped storage power system 200, the absolute value of the voltage vector obtained from the voltage $V_L$ of each phase is zero in the reset control locking condition determination unit 27 described above, and the absolute value is smaller than the threshold described above. Therefore, the reset control locking condition determination unit 27 determines that the condition for locking reset control was satisfied within a prescribed determination period, and outputs an output signal indicating this fact (for example, a signal of the value "1").

In this case, an AND condition of each of the signals input to the logic circuit L1 is not satisfied (not all of the signals have the value "1"), and therefore, the logic circuit L1 does not output a signal instructing that reset control will be performed (for example, a signal of the value "1"), the states of the switching control circuit F2 and the switch SW2 do not change, and reset control under the control of the reset control gate controller 23 is locked.

In a process in which the variable-speed pumped storage power system 200 is stopped for protection by the protection relay system after reset control is locked, when the reset control locking condition determination unit 27 receives a signal indicating an opening state of the parallel circuit breaker 5A (for example, a signal of the value "0"), the reset control locking condition determination unit 27 outputs a signal that does not instruct that reset control will be locked (for example, a signal of the value "0"). By doing this, a locking state is released.

According to the first embodiment, as an example, even when a three-phase short-circuit failure has occurred inside the variable-speed pumped storage power system 200 and the temperature of semiconductor elements such as the thyristors 14 in the short-circuit device 16 increases to exceed an allowable temperature during normal operation due to a large short-circuit current, the semiconductor elements in the short-circuit device 16 are not damaged due to the application of a voltage, and the semiconductor elements can remain a short-circuit state without the release of the short-circuit state. The variable-speed pumped storage power system 200 can be safely stopped by the protection relay system that operates due to the short-circuit failure. In addition, a current failure is not a grid system failure, and therefore the continuation of the operation of the variable-speed pumped storage power system 200 after the removal of the failure is not requested, and no hindrance occurs.

Further, the semiconductor elements such as the thyristors 14 are not damaged due to the application of a voltage in a high-temperature state. Therefore, the design of the overvoltage suppression device 13 can be determined based on a maximum failure current at the time of a grid system failure. In a case where a function of reset control is added, a reduction in the number of parallel circuits of the semiconductor elements that configure the short-circuit device 16 of the overvoltage suppression device 13, a reduction in a manufacturing cost, a reduction in the size of a device, a reduction in the size of a building, and the like can be achieved.

In the present embodiment, in the reset control locking condition determination unit 27, the condition of a "prescribed determination period" before control is performed to forcibly release the short-circuit state of the short-circuit device 16 is added to conditions for the absolute value of the voltage vector obtained from the voltage $V_L$ of each phase that is detected by the primary circuit voltage detector 9.

Even when a transient DC component at the time of the occurrence of a grid system failure is large and the short-circuit state of the short-circuit device 16 fails to be forcibly released immediately after the removal of the failure, a maximum value of a failure current at the time of the grid system failure is smaller than or equal to a set maximum current value of the short-circuit device 16. Therefore, the temperature of the semiconductor elements is smaller than or equal to an allowable value, and reset control may be performed. As an example, when the circuit breaker 101 of the power-plant high-voltage switchgear 100 is opened due to a grid system failure that has occurred at a terminal connecting the No. 1 power transmission line of FIG. 1 such that the failure is removed, the transfer of power is resumed between the grid system that has been restored to a voltage of the No. 2 power transmission line after the removal of the failure and the power system. A voltage may decrease again according to a current operation state, and the value of the voltage may become smaller than a threshold set for the determination of the grid system failure. This results in the unnecessary locking of reset control without any ingenuity. Accordingly, as an example, when the one-shot timer 31 uses the "prescribed determination period" as a time period until the grid system failure is removed, as described above, the locking of reset control due to a decrease in a voltage at this time can be prevented. In this case, when an applied current of the short-circuit device 16 is attenuated to be lower than or equal to a current value specified in advance after a given time period such that the reset condition is satisfied, the reset control locking condition determination unit 27 does not output a reset locking signal. Therefore, reset control can be performed, and the operation of the variable-speed pumped storage power system 200 can be continued.

In a case where the short-circuit state of the short-circuit device fails to be forcibly released immediately after the removal of the grid system failure, when a power generation facility may be stopped, a time period during which the reset control locking condition determination unit 27 determines whether control will be performed to forcibly release the short-circuit state of the short-circuit device 16 may be set to a time period before the control is performed.

In this case, the reset control locking condition determination unit 27 is configured to detect a prescribed phenomenon that occurs when a failure has occurred on the high-voltage side of the main transformer M or when a failure has not occurred on the low-voltage side of the main transformer M or inside the main transformer M (in this case, a fact that the value of a voltage on the low-voltage side of the main transformer M (a voltage on the stator winding side) is not lower than or equal to a voltage specified value that is specified in advance or is not lower than the voltage specified value during a time period before control is performed to forcibly release the short-circuit state of the short-circuit device 16 (for example, a time period until an output of 1 is output from the reset permission determination unit 26), or the reset control locking condition determination unit 27 is configured to detect that the prescribed phenomenon has not occurred. In the logic circuits L1 and L2, the switching control circuits F1 and F2, the switches SW1 and SW2, and the like, whether control to forcibly release the operation of the overvoltage suppression device 13 will be permitted to be performed is determined based on the detection result. Control to forcibly release the operation of the overvoltage suppression device 13 is performed under a condition wherein the phenomenon described above has been detected.

It is desirable that the short-circuit device 16 be configured to have a current capacity that is smaller than a current capacity that enables control to forcibly release the short-circuit state of the short-circuit device 16 to be performed on a maximum secondary winding current at the time of a three-phase short-circuit failure on the low-voltage side of the main transformer M, and configured to have a capacity that is greater than or equal to a greater one of a current capacity that enables a current to be applied until the generator-motor can be stopped without performing control to forcibly release the short-circuit state of the short-circuit device 16 on the maximum secondary winding current at the time of the three-phase short-circuit failure on the low-voltage side of the main transformer M or a current capacity that enables control to forcibly release the short-circuit state of the short-circuit device 16 to be performed on a maximum secondary winding current at the time of a three-phase short-circuit failure on the high-voltage side of the main transformer M. By employing the configuration described above, the size of the entirety of the overvoltage suppression device 13 including the short-circuit device 16 can be reduced without damaging equipment even when reset control is performed on the maximum failure current at the time of the occurrence of the three-phase short-circuit failure on the low-voltage side of the main transformer M, and a reduction in a cost and a reduction in the space of a power plant can be achieved.

(Second Embodiment)

A second embodiment is described next.

In the description below, description of a portion common to the first embodiment is omitted, and a portion different from the first embodiment is principally described.

In the first embodiment described above, a fact that the value of the "voltage on the low-voltage side of the main transformer M" during a period before control is performed to forcibly release the short-circuit state of the short-circuit device 16 is not smaller than or equal to a voltage specified value that is specified in advance (or does not fall below the voltage specified value) is one condition for performing reset control. Whereas, in the second embodiment, a fact that the value of a "rotor winding current" (an arm current (an OVP arm current) at a winding terminal of a rotor winding of a variable-speed generator-motor 2 or on a side of a secondary exciter 3) during a period before control is performed to forcibly release the short-circuit state of the short-circuit device 16 is not greater than or equal to a current specified value that is specified in advance (or does not exceed the current specified value is one condition for performing reset control.

This is implemented by configuring a reset control locking condition determination unit 27 to be provided with a value measured by a detector 12 or 15 that detects the arm current (the OVP arm current) at the winding terminal of the rotor winding of the variable-speed generator-motor 2 or on the side of the secondary exciter 3 instead of the value of a voltage $V_L$ of each phase, and by appropriately changing the design of the arithmetic expression of an arithmetic circuit 32 and the threshold of a threshold processing circuit 33.

In this case, the reset control locking condition determination unit 27 is configured to detect a prescribed phenomenon that occurs when a failure has occurred on a high-voltage side of the main transformer M or when a failure has not occurred on a low-voltage side of the main transformer M or inside the main transformer M (in this case, a fact that the value of a rotor winding current during a period before control is performed to forcibly release the short-circuit state of the short-circuit device 16 is not greater than or equal to a current specified value that is specified in advance or does not exceed the current specified value), or the reset control locking condition determination unit 27 is configured to detect that the prescribed phenomenon has not occurred. In logic circuits L1 and L2, switching control circuits F1 and F2, switches SW1 and SW2, and the like, whether control to forcibly release the operation of an overvoltage suppression device 13 will be permitted to be performed is determined based on the detection result. Control to forcibly release the operation of the overvoltage suppression device 13 is performed under a condition wherein the phenomenon described above has been detected.

According to the second embodiment, also in a configuration using the "rotor winding current" in locking condition determination, effects similar to effects in the first embodiment can be obtained.

(Third Embodiment)

A third embodiment is described next.

In the description below, description of a portion common to the first embodiment is omitted, and a portion different from the first embodiment is principally described.

In the first embodiment described above, a fact that the value of the "voltage on the low-voltage side of the main transformer M" during a period before control is performed to forcibly release the short-circuit state of the short-circuit device 16 is not smaller than or equal to a voltage specified value that is specified in advance (or does not fall below the voltage specified value) is one condition for performing reset control. Whereas, in the third embodiment, a fact that the "temperature of a prescribed element" (the temperature of semiconductor elements such as thyristors 14 that are included in a short-circuit device 16 or the temperature of semiconductor elements included in a secondary exciter 3) during a period before control is performed to forcibly release the short-circuit state of the short-circuit device 16 is not higher than or equal to an element-temperature specified value that is specified in advance or does not exceed the element-temperature specified value is one condition for performing reset control.

This is implemented by configuring a reset control locking condition determination unit 27 to be provided with a value measured by a detector (not illustrated) that detects the temperature of the semiconductor elements such as the thyristors 14 that are included in the short-circuit device 16 or the temperature of the semiconductor elements included in the secondary exciter 3 instead of the value of a voltage $V_L$ of each phase, and by appropriately changing the design of the arithmetic expression of an arithmetic circuit 32 and the threshold of a threshold processing circuit 33.

In this case, the reset control locking condition determination unit 27 is configured to detect a prescribed phenomenon that occurs when a failure has occurred on a high-voltage side of a main transformer M or when a failure has not occurred on a low-voltage side of the main transformer M or inside the main transformer M (in this case, a fact that the temperature of a prescribed element during a period before control is performed to forcibly release the short-circuit state of the short-circuit device 16 is not higher than or equal to an element-temperature specified value that is specified in advance or does not exceed the element-temperature specified value), or the reset control locking condition determination unit 27 is configured to detect that the prescribed phenomenon has not occurred. In logic circuits L1 and L2, switching control circuits F1 and F2, switches SW1 and SW2, and the like, whether control to forcibly release the operation of an overvoltage suppression device 13 will be permitted to be performed is determined based on the detection result. Control to forcibly release the operation of the overvoltage suppression device 13 is performed under a condition wherein the phenomenon described above has been detected.

According to the third embodiment, also in a configuration using the "temperature of a prescribed element" in locking condition determination, effects similar to effects in the first embodiment can be obtained.

(Fourth Embodiment)

A fourth embodiment is described next.

In the description below, description of a portion common to the first embodiment is omitted, and a portion different from the first embodiment is principally described.

In the first embodiment described above, a fact that the value of the "voltage on the low-voltage side of the main transformer M" during a period before control is performed to forcibly release the short-circuit state of the short-circuit device 16 is not smaller than or equal to a voltage specified value that is specified in advance (or does not fall below the voltage specified value) is one condition for performing reset control. Whereas, in the fourth embodiment, a fact that a point of the occurrence of an electric failure that results in the occurrence of an overvoltage is located on a grid-system side which is away from a winding terminal on a high-voltage side of a main transformer is one condition for performing reset control.

This is implemented by configuring a reset control locking condition determination unit 27 to be provided with an operation signal of, for example, a segment protection relay (such as a generator current differential relay, a principal circuit bus current differential relay, or a main transformer differential current relay) that detects a failure occurrence point of a failure in a plant or a failure of the grid system that stops for protection a variable-speed pumped storage power system including a power-plant high-voltage switchgear or a value indicating a failure occurrence point that is specified by the operation signal, instead of the value of a voltage $V_L$ of each phase, and by changing the design of the arithmetic expression of an arithmetic circuit 32 and a threshold processing circuit 33 in such a way that the threshold processing circuit 33 outputs a signal that locks reset control (for example, a signal of the value "1") in the case of a failure that causes the variable-speed pumped storage power system to be stopped for protection.

In this case, the reset control locking condition determination unit 27 is configured to detect a prescribed phenomenon that occurs when a failure has occurred on a high-voltage side of a main transformer M or when a failure has not occurred on a low-voltage side of the main transformer M or inside the main transformer M (in this case, a fact that a prescribed protection relay device does not operate during a period before control is performed to forcibly release the short-circuit state of a short-circuit device 16), or the reset control locking condition determination unit 27 is configured to detect that the prescribed phenomenon has not occurred. In logic circuits L1 and L2, switching control circuits F1 and F2, switches SW1 and SW2, and the like, whether control to forcibly release the operation of an overvoltage suppression device 13 will be permitted to be performed is determined based on the detection result. Control to forcibly release the operation of the overvoltage suppression device 13 is performed under a condition wherein the phenomenon described above has been detected.

According to the fourth embodiment, also in a configuration using the operation of a generator current differential relay, a principal circuit bus current differential relay, a main transformer differential current relay, or the like in reset control locking condition determination, effects similar to effects in the first embodiment can be obtained.

(Fifth Embodiment)

A fifth embodiment is described next.

In the description below, description of a portion common to the first embodiment is omitted, and a portion different from the first embodiment is principally described.

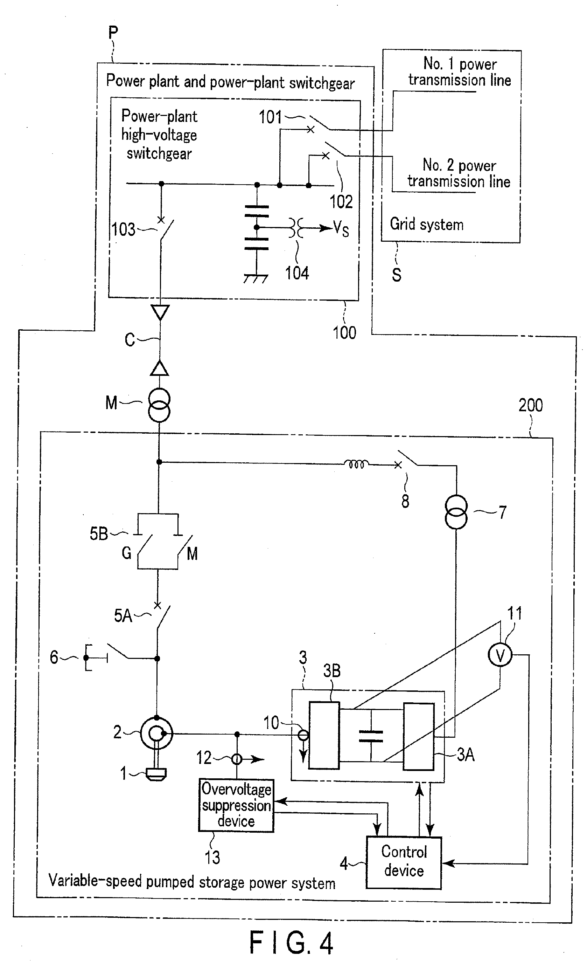

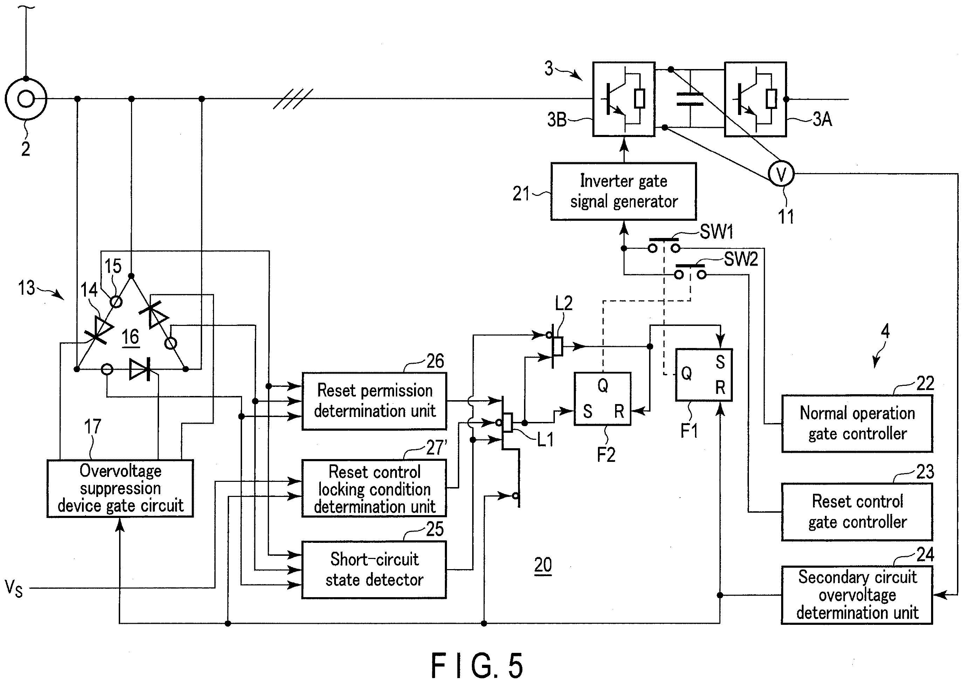

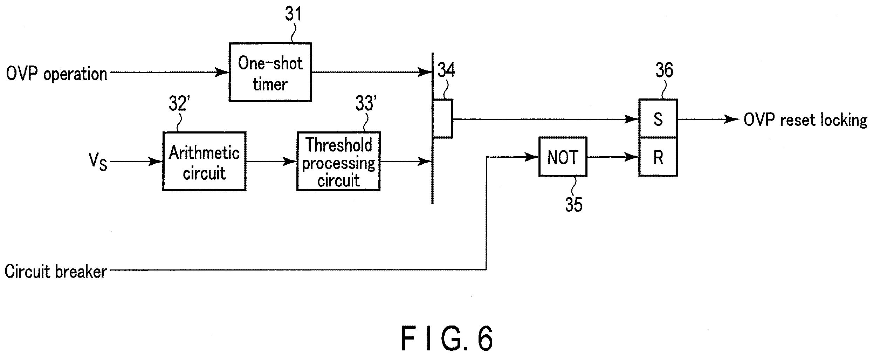

FIG. 4 is a diagram showing the overall configuration of a power system including a variable-speed pumped storage power system according to the fifth embodiment. FIG. 5 is a configuration diagram mainly showing a functional configuration related to an overvoltage protection device 20 of the variable-speed pumped storage power system according to the fifth embodiment. FIG. 6 is a diagram showing an example of an internal configuration of a reset control locking condition determination unit 27' in FIG. 5. The same reference numbers are given to the same components as those in FIG. 1 to FIG. 3.

In the first embodiment described above, a fact that the value of the "voltage on the low-voltage side of the main transformer M" during a period before control is performed to forcibly release the short-circuit state of the short-circuit device 16 is not smaller than or equal to a voltage specified value that is specified in advance (or does not fall below the voltage specified value) is one condition for performing reset control. Whereas, in the fifth embodiment, a fact that the value of a "voltage on a high-voltage side of a main transformer M" during a period before control is performed to forcibly release the short-circuit state of a short-circuit device 16 is not smaller than or equal to a voltage specified value that is specified in advance (or does not fall below the voltage specified value) is one condition for performing reset control.

This is implemented by configuring the reset control locking condition determination unit 27' to be provided with the value of a voltage $V_S$ of each phase detected by a voltage detector 104 on the high-voltage side of the main transformer M instead of the value of a voltage $V_L$ of each phase detected by a primary circuit voltage detector 9 on a low-voltage side of the main transformer M, and by appropriately changing the design of the arithmetic expression of an arithmetic circuit 32' and the threshold of a threshold processing circuit 33'.

In this case, the reset control locking condition determination unit 27' is configured to detect a prescribed phenomenon that occurs when a failure has occurred on the high-voltage side of the main transformer M or when a failure has not occurred on the low-voltage side of the main transformer M or inside the main transformer M (in this case, a fact that the value of a voltage on the high-voltage side of the main transformer M during a period before control is performed to forcibly release the short-circuit state of the short-circuit device 16 is not smaller than or equal to a voltage specified value that is specified in advance or does not fall below the voltage specified value), or the reset control locking condition determination unit 27' is configured to detect that the prescribed phenomenon has not occurred. In logic circuits L1 and L2, switching control circuits F1 and F2, switches SW1 and SW2, and the like, whether control to forcibly release the operation of an overvoltage suppression device 13 will be permitted to be performed is determined based on the detection result. Control to forcibly release the operation of the overvoltage suppression device 13 is performed under a condition wherein the phenomenon described above has been detected.

In some power plants, as requirements for continuing operation at the time of a grid system failure, it is not requested that a voltage on a high-voltage side of a main transformer be 0V (namely, a complete short-circuit at a terminal connecting a grid system), and the value of the voltage on the high-voltage side of the main transformer M that is obtained from the value of a voltage $V_S$ of each phase detected by a voltage detector 104 is specified to be greater than or equal to a certain value (for example, "20% of a rated voltage of a primary circuit"). In this case, by applying this value to the threshold of a threshold processing circuit 33 and setting this value as one condition for performing reset control, an overvoltage protection device can be provided that has a necessary and sufficient capacity in a case where the continuation of operation is requested, similarly to the first embodiment.

According to the fifth embodiment, also in a configuration using the "voltage on the high-voltage side of the main transformer M" in locking condition determination, effects similar to effects in the first embodiment can be obtained.

(Sixth Embodiment)

A sixth embodiment is described next.

In the description below, description of a portion common to the first embodiment is omitted, and a portion different from the first embodiment is principally described.

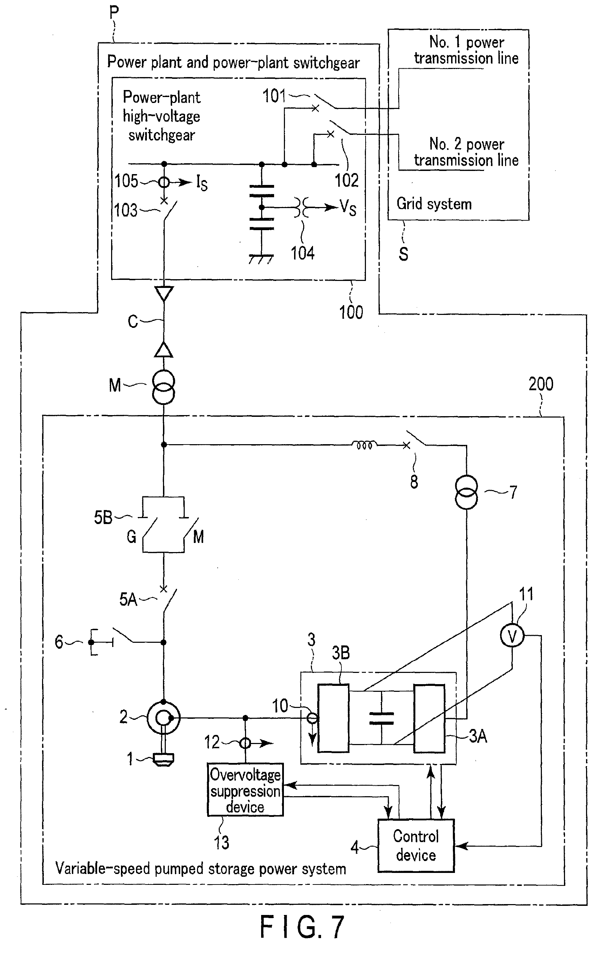

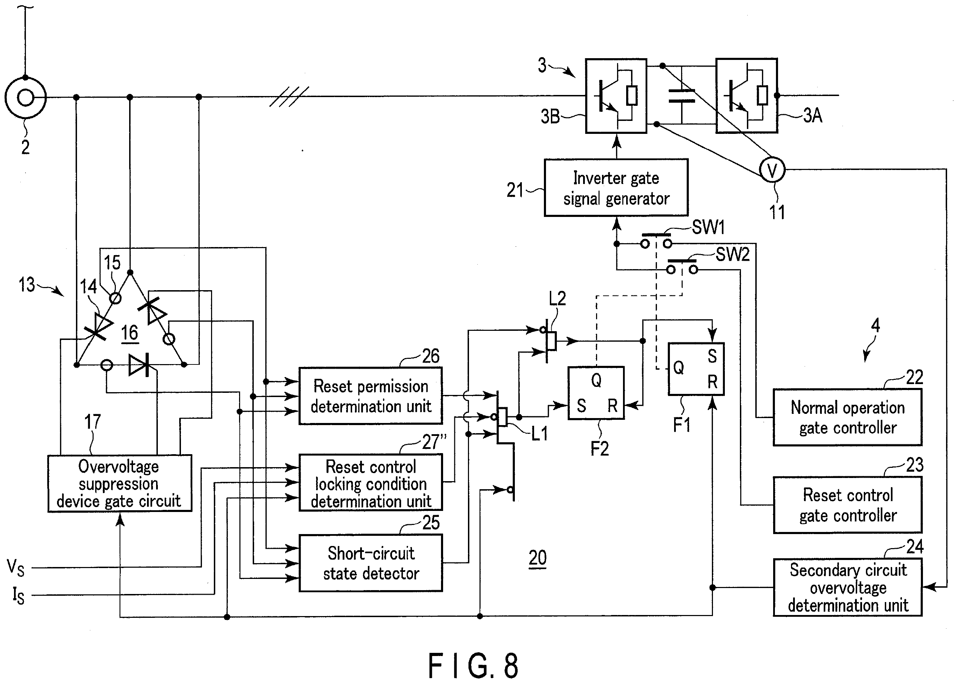

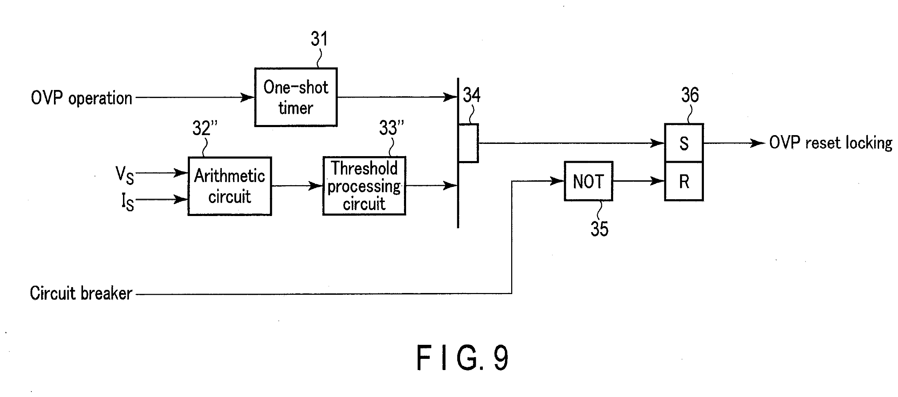

FIG. 7 is a diagram showing the overall configuration of a power system including a variable-speed pumped storage power system according to the sixth embodiment. FIG. 8 is a configuration diagram mainly showing a functional configuration related to an overvoltage protection device 20 of the variable-speed pumped storage power system according to the sixth embodiment. FIG. 9 is a diagram showing an example of an internal configuration of a reset control locking condition determination unit 27" in FIG. 8. The same reference numbers are given to the same components as those in FIG. 1 to FIG. 3.

In the first embodiment described above, a fact that the value of the "voltage on the low-voltage side of the main transformer M" during a period before control is performed to forcibly release the short-circuit state of the short-circuit device 16 is not smaller than or equal to a voltage specified value that is specified in advance (or does not fall below the voltage specified value) is one condition for performing reset control. Whereas, in the sixth embodiment, a fact that an impedance (a complex impedance having a real part R and an imaginary part X) that is obtained from a "voltage and current on a high-voltage side of a main transformer M" during a period before control is performed to forcibly release the short-circuit state of a short-circuit device 16 is not within a specified range that is specified in advance is one condition for performing reset control.

This is implemented by configuring the reset control locking condition determination unit 27" to be provided with the value of a voltage $V_S$ of each phase detected by a voltage detector 104 on the high-voltage side of the main transformer M and the value of a current $I_S$ of each phase detected by a current detector 105 on the high-voltage side of the main transformer M, instead of the value of a voltage $V_L$ of each phase detected by a primary circuit voltage detector 9 on a low-voltage side of the main transformer M, and by appropriately changing the design of the arithmetic expression of an arithmetic circuit 32" and the threshold of a threshold processing circuit 33".

In this case, the reset control locking condition determination unit 27" is configured to detect a prescribed phenomenon that occurs when a failure has occurred on the high-voltage side of the main transformer M or when a failure has not occurred on the low-voltage side of the main transformer M or inside the main transformer M (in this case, a fact that an impedance obtained from a high-voltage side voltage and a high-voltage side current of the main transformer M during a period before control is performed to forcibly release the short-circuit state of the short-circuit device 16 is not within the specified range that is specified in advance), or the reset control locking condition determination unit 27" is configured to detect that the prescribed phenomenon has not occurred. In logic circuits L1 and L2, switching control circuits F1 and F2, switches SW1 and SW2, and the like, whether control to forcibly release the operation of an overvoltage suppression device 13 will be permitted to be performed is determined based on the detection result. Control to forcibly release the operation of the overvoltage suppression device 13 is performed under a condition wherein the phenomenon described above has been detected.

The arithmetic circuit 32" calculates an impedance of each phase based on the value of the voltage $V_S$ of each phase detected by the voltage detector 104 and the value of the current $I_S$ of each phase detected by the current detector 105. As an example, in the case of a short-circuit failure, an impedance (a magnitude and a phase angle) for each phase is calculated according to the equations below, and is output.

$$\overline{Z}_{a\text{-}b} = (V_{Sa} - V_{Sb})/(I_{Sa} - I_{Sb}) \quad \ldots (2)$$

$$Z_{b\text{-}c} = (V_{Sb} - V_{Sc})/(I_{Sb} - I_{Sc}) \quad \ldots (3)$$

$$Z_{c\text{-}a} = (V_{Sc} - V_{Sa})/(I_{Sc} - I_{Sa}) \quad \ldots (4)$$

where

$Z_{a\text{-}b}$: impedance between a-phase and b-phase;
$Z_{b\text{-}c}$: impedance between b-phase and c-phase;
$Z_{c\text{-}a}$: impedance between c-phase and a-phase;
$V_{Sa}$: voltage of a-phase;
$V_{Sb}$: voltage of b-phase;
$V_{Sc}$: voltage of c-phase;
$I_{Sa}$: current of a-phase;
$I_{Sb}$: current of b-phase; and
$I_{Sc}$: current of c-phase.

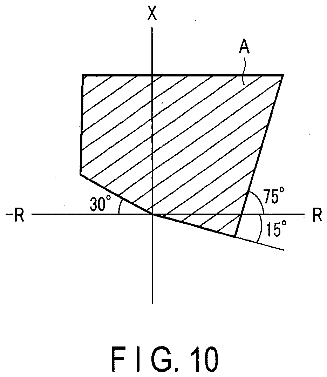

The threshold processing circuit 33" determines whether the impedance (the magnitude and the phase angle) of each of the phases falls within a prescribed specified range A on an impedance complex plane that is formed by an R-axis and an x-axis shown in FIG. 10. When there is an impedance that falls within the specified range A, the threshold processing circuit 33" outputs a signal of the value "1". When no impedances fall within the specified range A, the threshold processing circuit 33" outputs a signal of the value "0". However, the specified range A is not limited to a range in the example of FIG. 10. The design of the specified range A may be appropriately changed according to, for example, the specification of continuous operation requested for a power plant.

The specified range A is set from the viewpoint of not hindering the performance of reset control when a failure has occurred on the high-voltage side of the main transformer M and of obviating the flowing of a current that may damage equipment such as the short-circuit device 16 including semiconductor elements in a case where reset control is performed when a failure has occurred on the low-voltage side of the main transformer M or inside the main transformer M. Accordingly, the specified range A is set, for example, in such a way that a failure occurrence point at the time when a failure has occurred (whether a failure has occurred on the high-voltage side of the main transformer M or has occurred on the low-voltage side of the main transformer M or inside the main transformer M) can be identified from an output value of the threshold processing circuit 33".

More specifically, when the failure occurrence point is located on the high-voltage side of the main transformer M, the threshold is set in such a way that a value output from the arithmetic circuit 32" (namely, the impedance of each of the phases) is outside the specified range A. When the failure occurrence point is located on the low-voltage side of the main transformer M or inside the main transformer M, the threshold is set in such a way that the value output from the arithmetic circuit 32" (namely, the impedance of each of the phases) is within the specified range A.

By setting the specified range A as described above, the reset control locking condition determination unit 27" can detect based on the output value of the threshold processing circuit 33" that a failure has occurred on the high-voltage side of the main transformer M (or a failure has not occurred on the low-voltage side of the main transformer M or inside the main transformer M), or the reset control locking condition determination unit 27" can detect that a failure has occurred on the low-voltage side of the main transformer M or inside the main transformer M (or a failure has not occurred on the high-voltage side of the main transformer M).

According to the sixth embodiment, also in a configuration using the "impedance on the high-voltage side of the main transformer M" in locking condition determination, effects similar to effects in the first embodiment can be obtained.

In each of the embodiments described above, an example in a case where an overvoltage protection device is applied to a variable-speed pumped storage power system using "pumped storage" as energy. However, the present invention is not limited to this, and the overvoltage protection device may be applied to a variable-speed power system using another type of energy such as "wind force".

As described above in detail, according to each of the embodiments, appropriate control is performed such that equipment is not damaged, and a reduction in the number of parallel circuits of semiconductor elements that form a short-circuit device, a reduction in a manufacturing cost, a reduction in the size of a device, a reduction in the size of a building, and the like can be achieved.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made. The accompanying claims and their equivalents are intended to cover such forms or modifications as would fall within the scope of the inventions.

**Claims**

1. An overvoltage protection device (20) for protecting a variable-speed power system which is connectable to a grid system on a high-voltage side of a main transformer (M), the variable-speed power system including a winding induction machine (2) implemented by a doubly-fed alternator in which a stator winding is connected to a circuit on a low-voltage side of the main transformer (M) and including an AC exciter (3) which is connected to a circuit of a rotor winding of the winding induction machine (2), the overvoltage protection device (20) comprising:

   an overvoltage suppression device (13) which includes a short-circuit device (16) including thyristors (14) that each are connected between phases of the rotor winding of the winding induction machine (2) and which is configured to connect respective phases via the short-circuit device (16) or via the short-circuit device (16) and a resistor; and
   a controller (23) configured to perform reset control to forcibly release a short-circuit state of the short-circuit device (16) by applying a reverse voltage to each of the thyristors (14) configuring the short-circuit device (16) from the AC exciter (3),
   **characterized in that**
   the overvoltage protection device (20) further comprises:

   a detection unit (27, 27', or 27") configured to detect a prescribed phenomenon that occurs when a failure has occurred on the high-voltage side of the main transformer (M) and when a failure has not occurred on the low-voltage side of the main transformer (M) or inside the main transformer (M) or to detect that the prescribed phenomenon has not occurred; and

a control unit (L1, L2, F1, F2, SW1, SW2) configured to determine, based on a detection result of the detection unit (27, 27', or 27"), whether the reset control to forcibly release the short-circuit state of the short-circuit device (16) by applying the reverse voltage to each of the thyristors(14) configuring the short-circuit device (16) from the AC exciter (3) is to be permitted to be performed.

2. The overvoltage protection device (20) according to claim 1, wherein
the detection unit (27, 27', or 27") is configured to detect that a value of a rotor winding current during a period before control is performed to forcibly release the short-circuit state of the short-circuit device (16) is not greater than or equal to a current specified value that is specified in advance or does not exceed the current specified value, and the control unit is configured to perform reset control to forcibly release the short-circuit state of the short-circuit device (16) based on the detection result.

3. The overvoltage protection device (20) according to claim 1, wherein
the detection unit (27, 27', or 27") is configured to detect that a value of a voltage on the low-voltage side or the high-voltage side of the main transformer (M) during a period before control is performed to forcibly release the short-circuit state of the short-circuit device (16) is not smaller than or equal to a voltage specified value that is specified in advance or does not fall below the voltage specified value, and the control unit is configured to perform reset control to forcibly release the short-circuit state of the short-circuit device (16) based on the detection result.

4. The overvoltage protection device (20) according to claim 1, wherein
the detection unit (27, 27', or 27") is configured to detect that a value of a voltage on the low-voltage side or the high-voltage side of the main transformer (M) during a prescribed determination period before control is performed to forcibly release the short-circuit state of the short-circuit device (16) is not smaller than or equal to a voltage specified value that is specified in advance or does not fall below the voltage specified value, and the control unit is configured to perform reset control to forcibly release the short-circuit state of the short-circuit device (16) based on the detection result.

5. The overvoltage protection device according to claim 1, wherein
the detection unit (27, 27', or 27") is configured to detect that a temperature of a prescribed element during a period before control is performed to forcibly release the short-circuit state of the short-circuit device (16) is not greater than or equal to an element-temperature specified value that is specified in advance or does not exceed the element-temperature specified value, and the control unit is configured to perform reset control to forcibly release the short-circuit state of the short-circuit device (16) based on the detection result.

6. The overvoltage protection device according to claim 1, wherein
the detection unit (27, 27', or 27") is configured to detect that a prescribed protection relay device does not operate during a period before control is performed to forcibly release the short-circuit state of the short-circuit device (16), and the control unit is configured to perform reset control to forcibly release the short-circuit state of the short-circuit device (16) based on the detection result.

7. The overvoltage protection device according to claim 1, wherein
the detection unit (27, 27', or 27") is configured to detect that an impedance obtained from a voltage and a current on the high-voltage side of the main transformer (M) during a period before control is performed to forcibly release the short-circuit state of the short-circuit device (16) is outside a specified range that is specified in advance, and the control unit is configured to perform reset control to forcibly release the short-circuit state of the short-circuit device (16) based on the detection result.

8. The overvoltage protection device according to any one of claims 1 to 7, wherein
the short-circuit device (16) is configured to have a current capacity that is smaller than a current capacity that enables reset control to forcibly release the short-circuit state of the short-circuit device (16) to be performed on a maximum secondary winding current at a time of a three-phase short-circuit failure on the low-voltage side of the main transformer (M), and configured to have a capacity that is greater than or equal to a greater one of a current capacity that enables a current to be applied until a generator-motor is stopped without performing reset control to forcibly release the short-circuit state of the short-circuit device (16) on the maximum secondary winding current at the time of the three-phase short-circuit failure on the low-voltage side of the main transformer (M) or a current capacity that enables reset control to forcibly release the short-circuit state of the short-circuit device (16) to be performed on a maximum secondary winding current at a time of a three-phase short-circuit failure on the high-voltage side of the main transformer (M).

**Patentansprüche**

1.  Überspannungs-Schutzvorrichtung (20) zum Schutz eines drehzahlvariablen Energiesystems, das mit einem Stromnetz auf der Hochspannungsseite eines Haupttransformators (M) verbunden werden kann, wobei das drehzahlvariable Energiesystem eine Wicklungs-Induktionsmaschine (2) enthält, die durch einen doppelgespeisten Wechselstromgenerator implementiert ist, bei dem eine Statorwicklung mit einem Stromkreis auf einer Niederspannungsseite des Haupttransformators (M) verbunden ist, und einen Wechselstromerreger (3) enthält, der mit einem Stromkreis einer Rotorwicklung der Wicklungs-Induktionsmaschine (2) verbunden ist, wobei die Überspannungs-Schutzvorrichtung (20) umfasst:

    eine Überspannungs-Unterdrückungsvorrichtung (13), die eine Kurzschlussvorrichtung (16) mit Thyristoren (14) enthält, die jeweils zwischen Phasen der Rotorwicklung der Wicklungs-Induktionsmaschine (2) geschaltet sind, und die konfiguriert ist zum Verbinden der jeweiligen Phasen über die Kurzschlussvorrichtung (16) oder über die Kurzschlussvorrichtung (16) und einen Widerstand; und
    eine Steuerung (23), die konfiguriert ist zum Ausführen einer Rücksetzsteuerung, um einen Kurzschlusszustand der Kurzschlussvorrichtung (16) zwangsweise aufzuheben, indem eine Sperrspannung an jeden der Thyristoren (14) angelegt wird, mit denen die Kurzschlussvorrichtung (16) konfiguriert ist, von dem Wechselstromerreger (3),
    **dadurch gekennzeichnet, dass**
    die Überspannungs-Schutzvorrichtung (20) ferner umfasst:

    eine Detektionseinheit (27, 27' oder 27"), die konfiguriert ist zum Detektieren eines vorgegebenen Phänomens, das auftritt, wenn ein Ausfall auf der Hochspannungsseite des Haupttransformators (M) aufgetreten ist und wenn ein Ausfall auf der Niederspannungsseite des Haupttransformators (M) oder innerhalb des Haupttransformators (M) nicht aufgetreten ist, oder zum Detektieren, dass das vorgegebene Phänomen nicht aufgetreten ist; und
    eine Steuereinheit (L1, L2, F1, F2, SW1, SW2), die konfiguriert ist zum Bestimmen, auf Grundlage eines Detektionsergebnisses der Detektionseinheit (27, 27' oder 27"), ob die Rücksetzsteuerung zum zwangsweisen Aufheben des Kurzschlusszustandes der Kurzschlussvorrichtung (16) durch Anlegen der Sperrspannung an jeden der Thyristoren (14), mit denen die Kurzschlussvorrichtung (16) konfiguriert ist, von dem Wechselstromerreger (3) durchgeführt werden darf.

2.  Überspannungs-Schutzvorrichtung (20) gemäß Anspruch 1, wobei
    die Detektionseinheit (27, 27' oder 27") konfiguriert zum Detektieren, dass ein Wert eines Rotorwicklungsstroms während einer Zeitdauer, bevor eine Steuerung zum zwangsweisen Aufheben des Kurzschlusszustandes der Kurzschlussvorrichtung (16) durchgeführt wird, nicht größer oder gleich einem im Voraus festgelegten Stromvorgabewert ist oder den Stromvorgabewert nicht überschreitet, und die Steuereinheit konfiguriert ist zum Ausführen einer Rücksetzsteuerung zum zwangsweisen Aufheben des Kurzschlusszustandes der Kurzschlussvorrichtung (16) auf Grundlage des Detektionsergebnisses.

3.  Überspannungs-Schutzvorrichtung (20) gemäß Anspruch 1, wobei
    die Detektionseinheit (27, 27' oder 27") konfiguriert ist zum Detektieren, dass ein Wert einer Spannung auf der Niederspannungsseite oder der Hochspannungsseite des Haupttransformators (M) während einer Zeitdauer vor dem Ausführen der Steuerung zum zwangsweisen Aufheben des Kurzschlusszustands der Kurzschlussvorrichtung (16) nicht kleiner oder gleich einem im Voraus festgelegten Spannungsvorgabewert ist oder nicht unter den Spannungsvorgabewert fällt, und die Steuereinheit konfiguriert ist zum Ausführen einer Rücksetzsteuerung zum zwangsweisen Aufheben des Kurzschlusszustands der Kurzschlussvorrichtung (16) auf Grundlage des Detektionsergebnisses.

4.  Überspannungs-Schutzvorrichtung (20) gemäß Anspruch 1, wobei
    die Detektionseinheit (27, 27' oder 27") konfiguriert ist zum Detektieren, dass ein Wert einer Spannung auf der Niederspannungsseite oder der Hochspannungsseite des Haupttransformators (M) während einer vorgegebenen Bestimmungs-Zeitdauer vor dem Ausführen der Steuerung zum zwangsweisen Aufheben des Kurzschlusszustandes der Kurzschlussvorrichtung (16) nicht kleiner oder gleich einem im Voraus festgelegten Spannungsvorgabewert ist oder nicht unter den Spannungsvorgabewert fällt, und die Steuereinheit konfiguriert ist zum Ausführen einer Rücksetzsteuerung zum zwangsweisen Aufheben des Kurzschlusszustands der Kurzschlussvorrichtung (16) auf Grundlage des Detektionsergebnisses.

5.  Überspannungs-Schutzvorrichtung gemäß Anspruch 1, wobei

die Detektionseinheit (27, 27' oder 27") konfiguriert ist zum Detektieren, dass eine Temperatur eines vorgegebenen Elements während einer Zeitdauer vor dem Ausführen der Steuerung zum zwangsweisen Aufheben des Kurzschlusszustands der Kurzschlussvorrichtung (16) nicht größer oder gleich einem im Voraus festgelegten Elementtemperaturvorgabewert ist oder den Elementtemperaturvorgabewert nicht überschreitet, und die Steuereinheit konfiguriert ist zum Ausführen der Rücksetzsteuerung zum zwangsweisen Aufheben des Kurzschlusszustands der Kurzschlussvorrichtung (16) auf Grundlage des Detektionsergebnisses.

6. Überspannungs-Schutzvorrichtung gemäß Anspruch 1, wobei
die Detektionseinheit (27, 27' oder 27") konfiguriert ist zum Detektieren, dass eine vorgegebene Schutzrelaisvorrichtung während einer Zeitdauer vor dem Ausführen der Steuerung zum zwangsweisen Aufheben des Kurzschlusszustands der Kurzschlussvorrichtung (16) nicht arbeitet, und die Steuereinheit konfiguriert ist zum Ausführen der Rücksetzsteuerung zum zwangsweisen Aufheben des Kurzschlusszustands der Kurzschlussvorrichtung (16) auf Grundlage des Detektionsergebnisses.

7. Überspannungs-Schutzvorrichtung gemäß Anspruch 1, wobei
die Detektionseinheit (27, 27' oder 27") konfiguriert ist zum Detektieren, dass eine Impedanz, die aus einer Spannung und einem Strom auf der Hochspannungsseite des Haupttransformators (M) während eines Zeitraums vor dem Ausführen der Steuerung zum zwangsweisen Aufheben des Kurzschlusszustands der Kurzschlussvorrichtung (16) erhalten wird, außerhalb eines im Voraus festgelegten Bereichs liegt, und die Steuereinheit konfiguriert ist zum Ausführen der Rücksetzsteuerung zum zwangsweisen Aufheben des Kurzschlusszustands der Kurzschlussvorrichtung (16) auf Grundlage des Detektionsergebnisses.

8. Überspannungs-Schutzvorrichtung gemäß einem der Ansprüche 1 bis 7, wobei
die Kurzschlussvorrichtung (16) konfiguriert ist zum Aufweisen einer Stromkapazität, die kleiner ist als eine Stromkapazität, die es ermöglicht, die Rücksetzsteuerung zum zwangsweisen Aufheben des Kurzschlusszustands der Kurzschlussvorrichtung (16) auf einen maximalen Sekundärwicklungsstrom zu einem Zeitpunkt eines Dreiphasen-Kurzschlussausfalls auf der Niederspannungsseite des Haupttransformators (M) durchzuführen, und konfiguriert ist zum Aufweisen einer Kapazität, die größer oder gleich einer größeren Stromkapazität ist, die es ermöglicht, einen Strom anzulegen, bis ein Generator-Motor angehalten wird, ohne eine Rücksetzsteuerung auszuführen, um den Kurzschlusszustand der Kurzschlussvorrichtung (16) auf dem maximalen Sekundärwicklungsstrom zu einem Zeitpunkt des Dreiphasen-Kurzschlussausfalls auf der Niederspannungsseite des Haupttransformators (M) zwangsweise aufzuheben, oder eine Stromkapazität, die es ermöglicht, eine Rücksetzsteuerung auszuführen, um den Kurzschlusszustand der Kurzschlussvorrichtung (16) auf einem maximalen Sekundärwicklungsstrom zu einem Zeitpunkt des Dreiphasen-Kurzschlussausfalls auf der Hochspannungsseite des Haupttransformators (M) zwangsweise aufzuheben.

**Revendications**

1. Dispositif de protection de surtension (20) pour protéger un système d'énergie à vitesse variable pouvant être relié à un système de réseau sur un côté haute tension d'un transformateur principal (M), le système d'énergie à vitesse variable incluant une machine à induction d'enroulement (2) mise en oeuvre par un alternateur à double alimentation dans lequel un enroulement de stator est relié à un circuit sur un côté basse tension du transformateur principal (M) et incluant un excitateur CA (3) qui est relié à un circuit d'un enroulement de rotor de la machine à induction d'enroulement (2), le dispositif de protection de surtension (20) comprenant :

un dispositif de suppression de surtension (13) qui inclut un dispositif de court-circuit (16) incluant des thyristors (14) qui sont chacun reliés entre des phases de l'enroulement de rotor de la machine à induction d'enroulement (2) et qui est configuré pour relier des phases respectives via le dispositif de court-circuit (16) ou via le dispositif de court-circuit (16) et une résistance ; et
un dispositif de commande (23) configuré pour effectuer une commande de réinitialisation pour libérer de force un état de court-circuit du dispositif de court-circuit (16) par l'application d'une tension inverse à chacun des thyristors (14) configurant le dispositif de court-circuit (16) à partir de l'excitateur CA (3),
**caractérisé en ce que**
le dispositif de protection de surtension (20) comprend en outre :

une unité de détection (27, 27', ou 27") configurée pour détecter un phénomène prescrit qui survient lorsqu'une défaillance est survenue sur le côté haute tension du transformateur principal (M) et lorsqu'une défaillance n'est pas survenue sur le côté basse tension du transformateur principal (M) ou à l'intérieur du transformateur principal (M) ou pour détecter que le phénomène prescrit n'est pas survenu ; et
une unité de commande (L1, L2, F1, F2, SW1, SW2) configurée pour déterminer, sur la base d'un résultat de détection de l'unité de détection (27, 27', ou 27"), si la commande de réinitialisation pour libérer de force l'état de court-circuit du dispositif de court-circuit (16) par l'application de la tension inverse à chacun des thyristors (14) configurant le dispositif de court-circuit (16) à partir de l'excitateur CA (3) doit ou non être autorisée à être effectuée.

**2.** Dispositif de protection de surtension (20) selon la revendication 1, dans lequel
l'unité de détection (27, 27', ou 27") est configurée pour détecter qu'une valeur d'un courant d'enroulement de rotor au cours d'une période avant qu'une commande ne soit effectuée pour libérer de force l'état de court-circuit du dispositif de court-circuit (16) n'est pas supérieure ou égale à une valeur spécifiée de courant qui est spécifiée à l'avance ou ne dépasse pas la valeur spécifiée de courant, et l'unité de commande est configurée pour effectuer une commande de réinitialisation pour libérer de force l'état de court-circuit du dispositif de court-circuit (16) sur la base du résultat de détection.

**3.** Dispositif de protection de surtension (20) selon la revendication 1, dans lequel
l'unité de détection (27, 27', ou 27") est configurée pour détecter qu'une valeur d'une tension sur le côté basse tension ou le côté haute tension du transformateur principal (M) au cours d'une période avant qu'une commande ne soit effectuée pour libérer de force l'état de court-circuit du dispositif de court-circuit (16) n'est pas inférieure ou égale à une valeur spécifiée de tension qui est spécifiée à l'avance ou ne tombe pas au-dessous de la valeur spécifiée de tension, et l'unité de commande est configurée pour effectuer une commande de réinitialisation pour libérer de force l'état de court-circuit du dispositif de court-circuit (16) sur la base du résultat de détection.

**4.** Dispositif de protection de surtension (20) selon la revendication 1, dans lequel
l'unité de détection (27, 27', ou 27") est configurée pour détecter qu'une valeur d'une tension sur le côté basse tension ou le côté haute tension du transformateur principal (M) au cours d'une période de détermination prescrite avant qu'une commande ne soit effectuée pour libérer de force l'état de court-circuit du dispositif de court-circuit (16) n'est pas inférieure ou égale à une valeur spécifiée de tension qui est spécifiée à l'avance ou ne tombe pas au-dessous de la valeur spécifiée de tension, et l'unité de commande est configurée pour effectuer une commande de réinitialisation pour libérer de force l'état de court-circuit du dispositif de court-circuit (16) sur la base du résultat de détection.

**5.** Dispositif de protection de surtension selon la revendication 1, dans lequel
l'unité de détection (27, 27', ou 27") est configurée pour détecter qu'une température d'un élément prescrit au cours d'une période avant qu'une commande ne soit effectuée pour libérer de force l'état de court-circuit du dispositif de court-circuit (16) n'est pas supérieure ou égale à une valeur spécifiée de température d'élément qui est spécifiée à l'avance ou ne dépasse pas la valeur spécifiée de température d'élément, et l'unité de commande est configurée pour effectuer une commande de réinitialisation pour libérer de force l'état de court-circuit du dispositif de court-circuit (16) sur la base du résultat de détection.

**6.** Dispositif de protection de surtension selon la revendication 1, dans lequel
l'unité de détection (27, 27', ou 27") est configurée pour détecter qu'un dispositif de relais de protection prescrit ne fonctionne pas au cours d'une période avant qu'une commande ne soit effectuée pour libérer de force l'état de court-circuit du dispositif de court-circuit (16), et l'unité de commande est configurée pour effectuer une commande de réinitialisation pour libérer de force l'état de court-circuit du dispositif de court-circuit (16) sur la base du résultat de détection.

**7.** Dispositif de protection de surtension selon la revendication 1, dans lequel
l'unité de détection (27, 27', ou 27") est configurée pour détecter qu'une impédance obtenue à partir d'une tension et d'un courant sur le côté haute tension du transformateur principal (M) au cours d'une période avant qu'une commande ne soit effectuée pour libérer de force l'état de court-circuit du dispositif de court-circuit (16) est à l'extérieur d'une plage spécifiée qui est spécifiée à l'avance, et l'unité de commande est configurée pour effectuer une commande de réinitialisation pour libérer de force l'état de court-circuit du dispositif de court-circuit (16) sur la base du résultat de détection.

**8.** Dispositif de protection de surtension selon l'une quelconque des revendications 1 à 7, dans lequel
le dispositif de court-circuit (16) est configuré pour présenter une capacité de courant qui est inférieure à une capacité de courant qui permet à une commande de réinitialisation pour libérer de force l'état de court-circuit du dispositif de court-circuit (16) d'être effectuée sur un courant d'enroulement secondaire maximal à un temps d'une défaillance de court-circuit triphasé sur le côté basse tension du transformateur principal (M), et configuré pour présenter une capacité qui est supérieure ou égale à la plus grande parmi une capacité de courant qui permet à un courant d'être appliqué jusqu'à ce qu'un générateur-moteur soit arrêté sans effectuer de commande de réinitialisation pour libérer de force l'état de court-circuit du dispositif de court-circuit (16) sur le courant d'enroulement secondaire maximal au temps de la défaillance de court-circuit triphasé sur le côté basse tension du transformateur principal (M) ou une capacité de courant qui permet à une commande de réinitialisation pour libérer de force l'état de court-circuit du dispositif de court-circuit (16) d'être effectuée sur un courant d'enroulement secondaire maximal à un temps d'une défaillance de court-circuit triphasé sur le côté haute tension du transformateur principal (M).

FIG. 1

F I G. 2

EP 3 547 476 B1

OVP operation ————————→ [One-shot timer] **31**

V_L ——→ [Arithmetic circuit] **32** ——→ [Threshold processing circuit] **33** ——→ **34**

→ S **36** ————→ OVP reset locking

[NOT] **35** → R

Circuit breaker —————————————————————

# FIG. 3

FIG. 4

F I G. 5

EP 3 547 476 B1

F I G. 6

F I G. 7

FIG. 8

OVP reset locking

36

S

R

NOT 35

34

31 One-shot timer

33″ Threshold processing circuit

32″ Arithmetic circuit

OVP operation

$V_S$
$I_S$

Circuit breaker

F I G. 9

F I G. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3286049 B
- WO 2014012553 A1

- EP 2525464 A1